# EUROPEAN PATENT SPECIFICATION

(11) **EP 2 618 230 B1**
(45) Date of publication and mention of the grant of the patent: **16.06.2021**
(21) Application number: 13000166.2
(22) Date of filing: 14.01.2013
(51) Int. Cl.: G05B 23/02, G08B 21/18

(54) **Diagnostic apparatus and method**
Diagnosevorrichtung und Verfahren
Appareil et procédé de diagnostic

(30) Priority: 17.01.2012 KR 20120005353
(43) Date of publication of application: 24.07.2013
(73) Proprietor: LG ELECTRONICS INC., Yeongdeungpo-gu Seoul 07336 (KR)
(72) Inventor: Kong, Hyunwoo, 641-110 Kyungsangnam-do (KR)
(74) Representative: Ter Meer Steinmeister & Partner

(56) References cited:
- EP-A1- 2 530 551
- EP-A2- 2 677 687
- JP-A- 2004 265 317
- US-A- 4 977 394
- US-A1- 2006 086 796
- US-A1- 2011 018 729
- US-A1- 2011 054 844
- None

## Description

### BACKGROUND

### 1. Field

The present invention concerns a home appliance diagnostic apparatus configured to recognize product information output by a home appliance to thereby diagnose the home appliance and a related method.

### 2. Background

In general, if an error occurs while a home appliance is working, a user asks a service center for advice, and accordingly takes steps to thereby treat it on his own or requests them to dispatch a service person to take care of the matter.

However, such user's response cannot precisely let the service center know erroneous symptoms of the home appliance, so that the service center cannot give a proper response.

For a user to exactly explain the erroneous state of a home appliance to a service center, a scheme has been recently considered which converts a symptom of a refrigerator into a predetermined pattern of a signal sound, output it, and transmit this to the service center by way of a telephone.

However, the signal sound transferred in such way contains only information on the current state of the home appliance but not any information on a history of operation performed thus far.

In particular, among home appliances, refrigerators generally stay operated once power is turned on, and thus, the cause of current malfunctions of a refrigerator is closely involved in the state in which the refrigerator has been operated thus far, as well as the current state thereof.

Accordingly, the conventional scheme in which only information on the current state is output as a signal sound fails to precisely diagnose the state of a home appliance. This is also the case for the home appliances described in US 2011/0054844 A1 and US 2011/0018729 A1 where a home appliance outputs product information as a sound signal and a service center remotely performs fault diagnosis of the home appliance by receiving the sound signal.

Other diagnosis methods include methods in which the home appliance outputs information visually. US 4,977,394, for instance, provides an appliance including a diagnostic system, wherein a user is alerted to request servicing for major operational errors by a visual output. However, the display unit of this appliance is only configured to output a diagnosis result. It can neither indicate that a diagnosis mode has started nor that the diagnosis has been completed. Devices with similar drawbacks are known from EP 2 530 551 A, JP 2004 265317 A, US 2006/086796 A1 and EP 2 677 687 A2.

### SUMMARY

One object is to provide a home appliance diagnostic apparatus and a method thereof, which convert and output product information for diagnosing the state of a home appliance and capture the output signal to thereby diagnose the state of the home appliance, so that it may be diagnosed whether a failure occurs in the home appliance and the failure may be responded.

The present invention provides a diagnostic apparatus for a home appliance with the features of claim 2. The diagnostic apparatus, for instance includes a camera configured to capture a signal displayed at a home appliance as an image signal, a first image processing unit configured to convert the image signal captured by the camera into image data for a plurality of frames of the image signal, a second image processing unit configured to analyze the image data of the first image processing unit for the plurality of frames, to recognize a code included in a frame, and to extract data associated with the code, a data processing unit configured to convert data extracted by the second image processing unit into product information, a diagnosing unit configured to diagnose the home appliance based on the product information and to generate a diagnosis result, and a controller configured to drive the camera when a diagnosis mode is performed so that the image signal is captured and to perform control so that the diagnosis result is generated.

Further, the present invention provides a diagnosis method of a diagnostic apparatus for a home appliance with the features of claim 1. The diagnosis method of a diagnostic apparatus, for instance, includes capturing a signal output of a displaying unit of a home appliance as a video when a diagnosis mode is performed, sensing a code by analyzing image data of the signal, analyzing a frame from the image data to perform an error check and determining a valid frame, recognizing a code included in the valid frame to extract data, performing data conversion and extracting product information, and diagnosing the home appliance corresponding to the product information and outputting a diagnosis result.
Accordingly, the home appliance diagnostic apparatus, and the diagnosis method perform a failure diagnosis on the home appliance irrespective of surrounding environments by converting stored product information to output a predetermined form of a code, capturing the output code and diagnosing the home appliance, thereby enhancing convenience.

Further, a more precise diagnose of the operation state of the home appliance and quick response to a failure may be performed so that the efficiency of the service system is enhanced and user's satisfaction is increased.

### BRIEF DESCRIPTION OF THE DRAWINGS

The accompanying drawings, which are included to provide a further understanding of the disclosure and are incorporated in and constitute a part of this specification, illustrate embodiments of the disclosure and together with the description serve to explain the principles of the disclosure.

In the drawings:
Fig. 1 is a view illustrating a diagnosis system including a home appliance and a diagnostic apparatus according to an embodiment of the present invention.
Fig. 2 is a view illustrating an example where a signal is outputted from a home appliance and the signal is inputted to a diagnostic apparatus according to an embodiment of the present invention.
Fig. 3 is a block diagram illustrating a configuration of a home appliance.
Figs. 4(a) - 4(b) illustrate a structure of a control signal generated by encoding product information stored in a home appliance.
Fig. 5 is a flowchart illustrating a method of outputting product information of a home appliance.
Fig. 6 is a view illustrating a configuration of a displaying unit that outputs product information in a home appliance.
Figs. 7(a) - 7(d) are views illustrating an example of outputting product information on the displaying unit of Fig. 6.
Fig. 8 is a block diagram illustrating a main configuration of a diagnostic apparatus according to an embodiment of the present invention.
Fig. 9 is a flowchart illustrating a method of inputting product information by a diagnostic apparatus according to an embodiment of the present invention.
Fig. 10 is a flowchart illustrating a method of processing product information of a diagnostic apparatus according to an embodiment of the present invention.
Fig. 11 is a flowchart illustrating a method of processing an image frame of a diagnostic apparatus according to an embodiment of the present invention.

### DETAILED DESCRIPTION

Advantages and features of the home appliances, the home appliance apparatus, and methods of achieving the same are apparent from the exemplary embodiments described below in detail in connection with the accompanying drawings. However, the present invention is not limited to the disclosed embodiments, and may be embodied in various forms. The exemplary embodiments are herein provided merely to thoroughly disclose the present invention.

The same reference denotations refer to the same components throughout the specification.

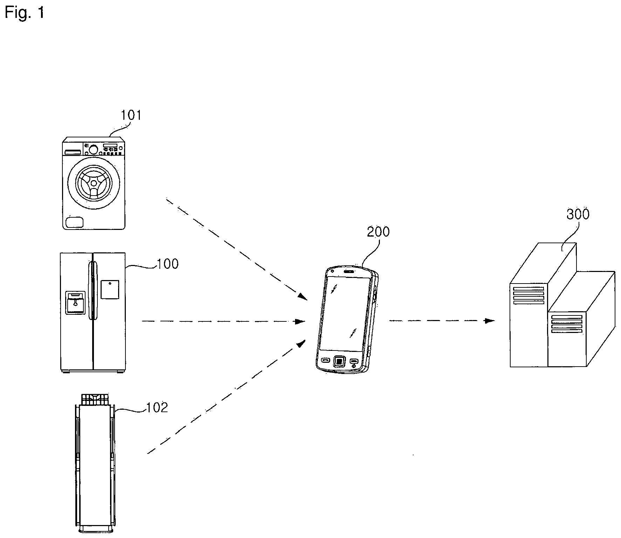

Fig. 1 is a view illustrating a diagnosis system including a home appliance and a diagnostic apparatus according to an embodiment of the present invention.

Referring to Fig. 1, the diagnosis system according to an embodiment of the present invention includes at least one home appliance 100, 101, or 102, a diagnostic apparatus 200, and a diagnosis server 300.

The home appliance stores, as product information, data generated or sensed during the operation, converts the data, and outputs the product information in a form of a predetermined code.

The diagnostic apparatus 200 captures and analyzes the product information outputted from the home appliance in the code form and extracts the product information from the captured data, thereby diagnosing the home appliance.

At this time, the diagnostic apparatus 200 diagnoses the home appliance, and specifically, receives data for diagnosis from the diagnosis server 300 to thereby diagnose the home appliance and transmit a diagnosis result to the diagnosis server 300.

Further, the diagnostic apparatus 200 may send a request for diagnosing the home appliance by transmitting the product information to the diagnosis server 300. In such case, the diagnostic apparatus 200 receives and outputs the diagnosis result of the diagnosis server 300.

The diagnosis server 300 transmits data for diagnosis in response to a request from the diagnostic apparatus 200 and receives a diagnosis result. In some cases, the diagnosis server 300 may receive the product information of the home appliance in response to a request from the diagnostic apparatus, diagnose the home appliance, and transmit a diagnosis result to the diagnostic apparatus 200.

Hereinafter, as an example, the home appliance is a refrigerator.

In case a failure occurs in the refrigerator 100 or the refrigerator 100 does not operate normally due to an environmental cause of a place where the refrigerator 100 is installed or a user's mal-operation, a predetermined alert sound is outputted from the refrigerator 100. The user recognizes the alert sound and takes proper steps, and if necessary, contacts a service center to inquire about measures. At this time, an operator of the service center provides a corresponding measure to the user.

Further, the user may also take some measure based on the manual of the diagnostic apparatus. If a smart diagnosis mode of the diagnostic apparatus is selected, a guide for treating any error of the home appliance is outputted to the diagnostic apparatus.

The user may attempt to take measures by manipulating the refrigerator 100 according to the treatment method given by the operator or the guide of the diagnostic apparatus, or may set a diagnosis mode in the refrigerator so that the state of the refrigerator may be diagnosed through the diagnostic apparatus or service center.

The user sets the diagnosis mode in the refrigerator according to the guide and brings the diagnostic apparatus 200 close to a displaying unit 141 of the refrigerator, and then captures an output of the displaying unit 141 of the refrigerator through a capturing mode of the diagnostic apparatus.

In one example, if the diagnosis mode is set, the refrigerator encodes the stored product information and continuously outputs a predetermined signal through the displaying unit 141. The user captures the signal output from the displaying unit 141 of the refrigerator as a video through the diagnostic apparatus 200.

If the user brings the diagnostic apparatus 200 close to the displaying unit 141 of the refrigerator, the diagnostic apparatus 200 recognizes the displaying unit 141 of the refrigerator and captures the signal that is outputted from the displaying unit 141 and that continuously varies as a video and stores the video.

The refrigerator 100 may include a selecting unit that allows the user to select execution of a diagnosis mode. The selecting unit may include a button, a dial, a tact switch, and a touch pad.

If entering into a diagnosis mode by the user manipulating the selecting unit, the refrigerator 100 converts the product information into a predetermined signal and outputs the converted signal. The signal, as described above, is outputted through the displaying unit 141 and captured by the diagnostic apparatus 200, and the product information is extracted by the diagnostic apparatus analyzing the signal. The diagnostic apparatus may diagnose the refrigerator by extracting the product information from the video or in case data is needed for diagnosis, may send a request for data to the service center. Further, in case diagnosis is impossible in the diagnostic apparatus, the product information may be transmitted to the service center so as to perform a diagnosis. The service center is connected to a communication network and may diagnose the refrigerator based on the product information received from the diagnostic apparatus 200.

The diagnostic apparatus 200 may output a diagnosis result on the displaying unit, and/or transmit the diagnosis result to the service center 300, and/or transmit the diagnosis result by email or through the user's mobile phone. Further, in case diagnosis of the refrigerator is performed in the service center, the service center diagnoses the refrigerator according to the product information received from the diagnostic apparatus and transmits a diagnosis result to the diagnostic apparatus. In some cases, the diagnosis result may be transmitted to the user's email or mobile phone. At this time, in case the diagnosis result shows that repair is needed, the service center may dispatch a repair person and transmit the diagnosis result to the repair person's terminal.

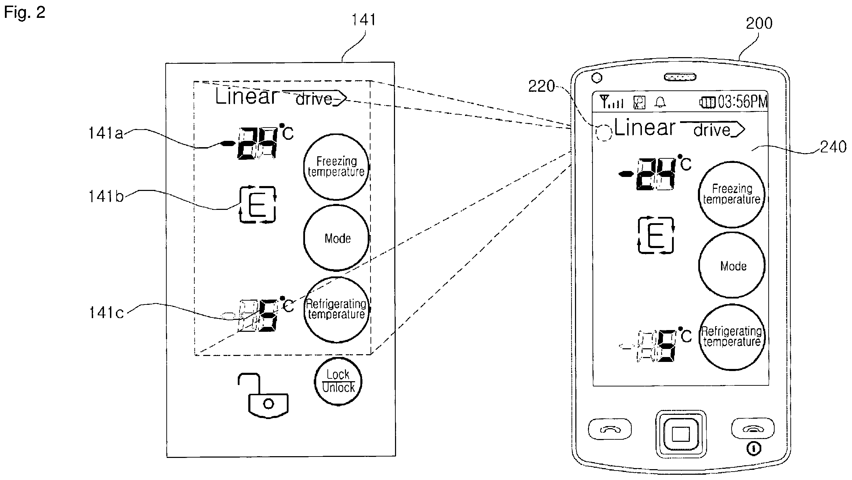

Fig. 2 is a view illustrating an example where a signal is outputted from a home appliance and the signal is inputted to a diagnostic apparatus according to an embodiment of the present invention.

Referring to Fig. 2, the displaying unit 141 of the refrigerator 100 outputs information, such as a freezing setting temperature 141a, a refrigerating setting temperature 141c, and a refrigerator operation mode 141b.

Once a diagnosis mode is set through the selecting unit of the refrigerator 100, a controller 160 of the refrigerator converts and encodes the stored product information and outputs it through the displaying unit 141.

If the smart diagnosis mode is in progress, and the diagnostic apparatus 200 is brought close to the displaying unit 141, as shown, and the diagnostic apparatus 200 captures the displaying unit 141 of the refrigerator 100 through a camera 220 of the diagnostic apparatus 200.

The diagnostic apparatus 200 recognizes a signal output of the displaying unit 141 and captures the signal as a video, analyzes the captured image to thereby extract the signal output from the refrigerator, and extracts the product information from the signal, thereby performing diagnosis on the refrigerator.

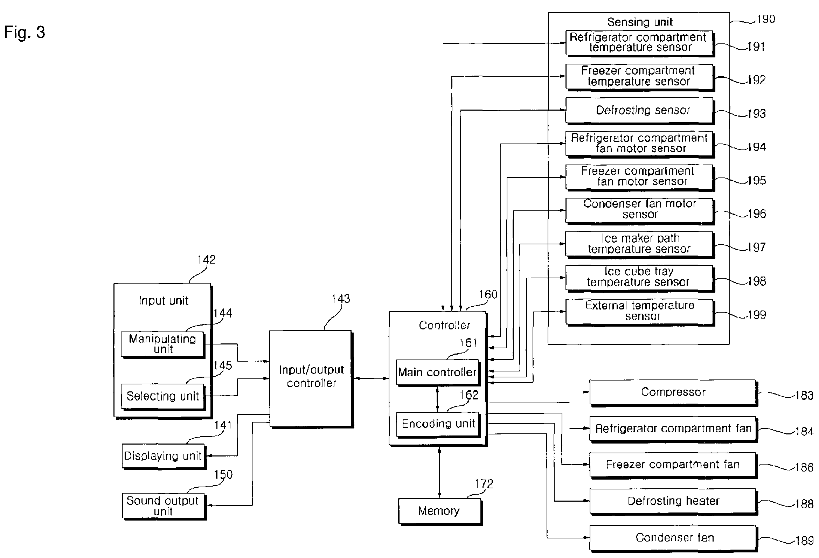

Fig. 3 is a block diagram illustrating a configuration of a home appliance.

The refrigerator 100 completes a circulation cycle including compression, expansion, evaporation, and condensation while a coolant circulates along coolant pipes. During such circulation cycle, the coolant goes through a phase change, by which heat exchange is performed between the coolant and surrounding air so that freezing or refrigerating is done. For this purpose, the refrigerator 100 includes a compressor (not shown) for compressing the coolant, an expansion valve (not shown) for expanding the coolant, a heat exchanger (not shown) that functions as an evaporator for evaporating the coolant, and another heat exchanger (not shown) that serves as a condenser for condensing the coolant.

A door of the refrigerator 100 includes a control panel for controlling the operation of the refrigerator 100 and allowing the state of the refrigerator 100 to be outputted through the displaying unit 141 as a screen and/or a sound.

The control panel includes the displaying unit 141 that visualizes and displays state information or failure information of the refrigerator 100 with a light emission means, such as an LED, LCD, or organic EL, a sound output means, such as a buzzer or speaker, which outputs a sound, and an input unit 142 implemented as a mechanical button or capacitive/resistive touch button through which various operation commands may be entered by the user.

Referring to Fig. 3, the refrigerator 100 includes an input unit 142, a displaying unit 141, an input/output controller 143, a memory 172, a sensing unit 190, a modulator 182, a compressor 183, a refrigerator compartment fan 184, a freezer compartment fan 186, a defrosting heater 188, a condenser fan 189, a sound output unit 150, and a controller 160 that controls the overall operation of the refrigerator.

The sensing unit 190 may include a refrigerator compartment temperature sensor 191 that senses the temperature of the refrigerator compartment 120, a freezer compartment temperature sensor 192 that senses the temperature of the freezer compartment 130, a defrosting sensor 193 that senses the temperature of a surface of an evaporator for determining whether to perform a defrosting operation, a refrigerator compartment fan motor sensor 194 that senses whether the refrigerator compartment fan 184 operates normally, a freezer compartment fan motor sensor 195 that senses whether the freezer compartment fan 186 operates normally, and a condenser fan motor sensor 196 that senses whether a condenser fan 189 for radiating heat generated from the condenser when heat exchange with the coolant is performed operates normally.

The controller 160 analyzes the operation state of the refrigerator 100 based on information collected through various sensors constituting the sensing unit 190, and the input/output controller 143 controls the state information sensed by the sensing unit 190 to be displayed through the displaying unit 141.

The input/output controller 143 relays between the displaying unit 141 and the input unit 142 provided in the control panel 140 and the controller 160. The input/output controller 143 transfers various control commands inputted by the user through the input unit 142 to the controller 160, enables signs, characters and/or images, such as icons, to be displayed through the displaying unit 141 in response to the input control commands, or when information sensed by the sensing unit 190 is transferred to the controller 160, enables state information to be displayed through the displaying unit 141 based on the transferred information.

The input unit 142 includes at least one input means that inputs a predetermined signal or data to the refrigerator 100 by the user's manipulation and may include a manipulating unit 144 that receives various control commands for operating the refrigerator 100 and a selecting unit 145 that receives a command for performing a diagnosis mode for diagnosing the refrigerator 100.

The selecting unit 145 includes at least one input means, and when a diagnosis mode execution command is inputted, applies the command to the controller 160 so that product information is encoded and outputted as a predetermined signal through the displaying unit 141.

At this time, the selecting unit 145 may be constituted as a predetermined input means separate from the manipulating unit 144, but is not limited thereto. For example, a specific input means constituting the manipulating unit 144 commonly functions as the manipulating unit 144, but may be configured to play a role as the selecting unit 145 depending on a predetermined pressing pattern, such as, e.g., when remained pressed for a predetermined time or more or repeatedly pressed within a predetermined time.

In the refrigerator 100, the input unit 142 includes a lock button that performs a key-lock function that allows the user to lock the manipulating unit 144 and a freezer compartment temperature setting button for setting the temperature of the refrigerator compartment 120.

At this time, in case a diagnosis mode is set by using the lock button and the temperature setting button, the refrigerator enters into a lock mode, e.g., by pressing the lock button with the refrigerator door 122 remaining open, and then enters into a diagnosis mode only when the freezer compartment temperature setting button is pressed before a preset time elapses. This may prevent the refrigerator from unnecessarily entering into the diagnosis mode due to an error in manipulation of the manipulating unit 144, so that the diagnosis mode is initiated only when it appears apparent that the user intends to diagnose the refrigerator 100.

The memory 172 stores the product information. As described above, the product information includes operation information sensed and accumulated through the sensing unit 190 during a predetermined period of time while the refrigerator 100 operates.

Here, the product information may include at least one of a product ID, configuration information, operation information, and error-detecting information.

The product ID is information for identifying the type of a target to be diagnosed through the diagnostic apparatus 200. The diagnostic apparatus 200 to be described below may be configured to perform diagnosis on various home appliances, such as a washing machine, an air conditioner, or a cooker, as well as a refrigerator, and the product ID may include information on the target for diagnosis performed by the diagnostic apparatus 200.

The configuration information is information input from the user to set functions of the refrigerator 100. Examples of the configuration information may include a freezer compartment setting temperature, a refrigerator compartment target temperature, a refrigerator setting temperature, a freezer compartment target temperature, whether to select quick freezing, high-speed freezing, or express freezing set to rapidly lower the temperature of the freezer compartment within a short time, whether a refrigerator to be diagnosed includes a dispenser to pull out water or ice, whether an air purifying mode is set to purify air in the refrigerator compartment or freezer compartment, whether a test mode has been set for test operation of the refrigerator, and whether a showcase mode is set for exhibition in a shop.

The operation information is information for an operation state of the refrigerator 100 and may include time information on a period of time during which product information has been accumulated in the memory 172, number of times of opening of the freezer compartment door which has been accumulated during a set period of time, opening time of the freezer compartment which has been accumulated during a set period of time, an average temperature, maximum temperature and/or minimum temperature sensed by the freezer compartment temperature sensor during a set period of time, driving time of the refrigerator compartment which has been accumulated during a set period of time, number of times of opening of the refrigerator compartment door which has been accumulated during a set period of time, opening time of the refrigerator compartment door which has been accumulated during a set period of time, an average temperature, maximum temperature, and/or minimum temperature sensed by the refrigerator compartment temperature sensor during a set period of time, driving time of the refrigerator compartment fan which has been accumulated during a set period of time, an average temperature, maximum temperature and/or minimum temperature sensed by an external air temperature sensor during a set period of time, a maximum temperature, an average temperature, maximum temperature, and/or minimum temperature sensed by the freezer compartment defrosting sensor during a set period of time, an average temperature, maximum temperature and/or minimum temperature sensed by the refrigerator compartment defrosting sensor during a set period of time, a freezer compartment defrosting time and/or refrigerator compartment defrosting time of defrosting performed most recently before a diagnosis is performed, a freezer compartment defrosting period of defrosting most recently performed before a diagnosis is performed, and an accumulated driving time of the compressor during a set period of time.

The error-detecting information is information regarding whether various components constituting the refrigerator operate normally. The error-detecting information may include information on whether water supply to an ice maker is performing normally, whether a water pad or ice pad provided in the dispenser 125 to pull out water or ice upon the user's press operates normally, various sensing units, such as the freezer compartment temperature sensor 192, the refrigerator compartment temperature sensor 191, the external air temperature sensor 199, the freezer compartment defrosting sensor, and the refrigerator compartment defrosting sensor, operate normally, and whether a driving device, such as a freezer compartment fan or a refrigerator compartment fan, operates normally.

When a signal is inputted from the selecting unit 145 according to entry into the diagnosis mode, the controller 160 calls the product information stored in the memory 172, generates a control signal in a predetermined format, and converts the control signal into a predetermined code of a signal. Further, the controller 160 enables the converted control signal to be outputted through the displaying unit 141 according to manipulation of the selecting unit 145.

The controller 160 includes a main controller 161 that controls the flow of data output or input from/to the refrigerator and generates a control command according to data input from the sensing unit 190 so that the refrigerator 100 operates and an encoding unit 162 that converts product information into a control signal of a predetermined format according to an input of the selecting unit 145 and encodes the control signal.

When the selecting unit 145 is entered and entry into the diagnosis mode is made, the main controller 161 enables a start sound to be outputted through the sound output unit 150 to inform that the diagnosis mode is initiated and enables predetermined data to be displayed through the displaying unit 141 to inform that the diagnosis mode is performed. At this time, the input/output controller 143 may relay between the main controller 161 and the displaying unit 141 as described above.

Further, the main controller 161 enables a control signal generated in the encoding unit 162 to be encoded and outputted as a predetermined signal through the displaying unit 141 and controls the displaying unit 141 so that a predetermined display is outputted before and after the signal is outputted or controls the sound output unit 150 so that an alert sound is outputted. However, the alert sound, in some cases, may be omitted. In this example, the main controller 161 enables a start code to be outputted before the signal is outputted and enables an end code to be outputted after the signal is outputted.

Upon entry into the diagnosis mode, the main controller 161 may stop the manipulating unit 144, except for the selecting unit 145 and power button, from operating. As described earlier, since, in this embodiment, entry into the diagnosis mode is initiated when a specific manipulating key, i.e., freezer compartment temperature setting button remains pressed for a predetermined time, with manipulation keys locked by the lock button, the operations of the power button and keys other than the freezer compartment temperature setting button whose functions were restricted, are limited before the lock button is released.

The encoding unit 162 calls the product information stored in the memory 172 and encodes the product information according to a designated scheme, and adds a preamble and an error check bit to the data signal to thereby generate a predetermined format of a control signal. The encoding unit 162 generates a control signal comprising of a plurality of symbols by encoding the product information.

Further, the encoding unit 162 splits the control signal to a predetermined size when generating the control signal, thereby constituting a packet with a plurality of frames. Further, the encoding unit 162 may configure an IFS (Inter Frame Space) between frames of the control signal.

Here, the product information is data constituted of a combination of 0's and 1's, and is a digital signal readable by the controller 160. The controller 160 classifies the data of the product information, allows specific data for the refrigerator operation to be included, divides or sums it to a predetermined size to thereby generate a control signal having a designated standard, encodes the control signal, and applies the control signal to the displaying unit 141.

At this time, "encoding" generally denotes outputting a signal having a form that appears meaningless and is a process of performing encryption according to a predetermined rule. Encoding is to perform matching and conversion on a specific format of a code of a control signal in the refrigerator on a per-bit or per-byte basis. The diagnostic apparatus may include data associated with the encoding and inversely output the product information from the encoded signal.

The sound output unit 150 may output an alert sound or an effect sound corresponding to the state information of the refrigerator, upon entry into the diagnosis mode, outputs a start sound to inform that the diagnosis mode has begun corresponding to a control command of the main controller 161, and when the output of a sound including the product information is started and ended, outputs predetermined alert sounds, respectively.

The displaying unit 141 displays, on the screen, information inputted by the selecting unit 145 and the manipulating unit 144, operation state information of the refrigerator 100, and information according to the completion of the refrigerator operation in response to a control command of the main controller 161. Further, the displaying unit 141 displays on the screen failure information regarding a malfunction of the refrigerator when the malfunction occurs.

Further, the displaying unit 141 displays a predetermined signal obtained by encoding the product information, which is outputted from the encoding unit, when the diagnosis mode is started in response to a control command of the main controller 161. At this time, the displaying unit 141 may use a plurality of 7-segments. According to the number of 7-segments used, the method of encoding the product information may also vary. In case an LCD is used, a predetermined form of a code may be outputted.

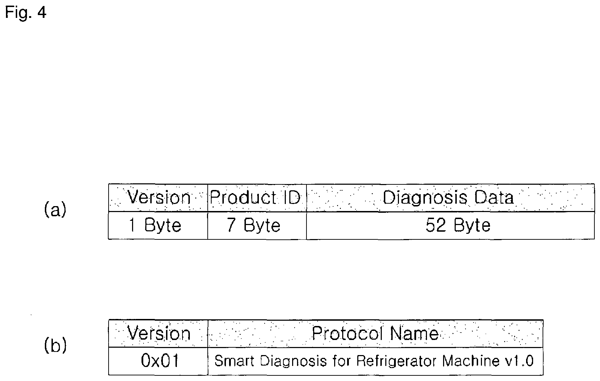

Figs. 4(a) - 4(b) illustrate a structure of a control signal generated by encoding product information stored in a home appliance.

As illustrated in Fig. 4a, the encoding unit 162 configures a packet with a plurality of frames. The encoding unit 162 adds a product ID and version information to product information that is diagnosis data. This is performed at an application layer. The size of the overall packet is, as an example, 60 bytes, with 1 byte of version information, 7 bytes of product ID, and 52 bytes of product information.

At this time, the version information is a version of a diagnosis algorithm and version information for the diagnosis algorithm or entire diagnosis system and means information on the protocol name corresponding thereto.

For example, in case, as shown in Fig. 4b, version is denoted as 0x01, the protocol name means 'Smart Diagnosis for Refrigerator Machine V1.0'. The product ID is an identifier for identifying a product, and the diagnosis data is product information for diagnosing a failure of the refrigerator.

The version and product ID are directly inputted by the controller 160. On the contrary, the diagnosis data, i.e., product information, is stored in the memory 172. Accordingly, if a smart diagnosis is performed, the controller 160 loads the data stored in the memory 172 and preliminary data as product information, i.e., diagnosis data.

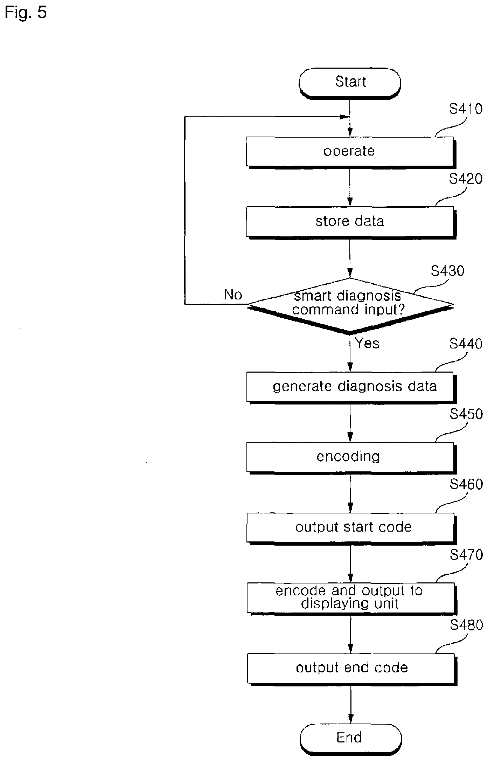

Fig. 5 is a flowchart illustrating a method of outputting product information of a home appliance.

Referring to Fig. 5, the controller 160 of the refrigerator stores, during the operation (S410), data measured by a plurality of sensors, a data analysis result, or operation setting data in the memory 172 (S420).

If a diagnosis mode entry command is inputted by entering the selecting unit 145 of the input unit 142 (S430), the controller 160 performs a diagnosis mode. At this time, while the diagnosis mode is in progress, the main controller 161 disregards an input of the controller 160 and outputs an alert in at least one form of a letter, an image, and an emoticon to advice entry into the diagnosis mode through the displaying unit 141. In some cases, a predetermined alert sound may be outputted.

The encoding unit 162 calls data stored in the memory 172 and collects data for diagnosis to thereby generate product information (S440).

Further, the encoding unit 162 encodes the product information into a control signal comprising of a plurality of frames according to a designated format (S450) and encodes the control signal according to set data on a per-bit or per-byte basis. For example, for the control signal is '0011', encoding is performed so that a code shaped as 'C' is outputted or for the control signal is '1010', encoding is conducted so that a code shaped as 'I' is outputted.

The main controller 161 outputs a start code before outputting a signal converted from the product information through the displaying unit 141 so as to inform that the signal is to be outputted (S460).

A predetermined time after the start code is outputted, the main controller 161 outputs through the displaying unit 141 a predetermined signal obtained by encoding the product information and converted by the encoding unit 162 (S470). At this time, the output signal may be continuously changed and outputted during a predetermined time.

If the output of the signal is complete, the main controller 161 outputs an end code (S480).

At this time, the start code and the end code may be constituted of a specific message, an image, or a special letter, and a code is used that is designated in advance through data exchange with the diagnostic apparatus.

If the home appliance, i.e., the refrigerator, completes output of the signal, the main controller 161 releases the diagnosis mode and operates normally.

Further, as described above in connection with Fig. 2, the diagnostic apparatus captures a signal output of the displaying unit of the home appliance during a predetermined time and performs image signal analysis to extract the product information, thereby diagnosing the home appliance.

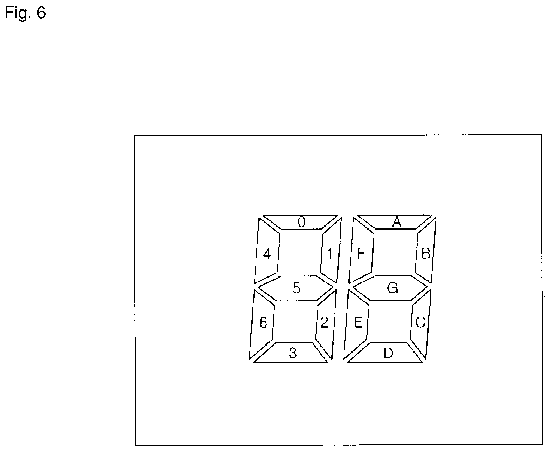

Fig. 6 is a view illustrating a configuration of a displaying unit that outputs product information in a home appliance.

Referring to Fig. 6, the displaying unit 141, which outputs encoded product information as a predetermined signal, uses 7- segments, for example.

The displaying unit 141 may include a plurality of 7-segments each of which has 7 light emission units configured to represent a predetermined form of a single character or numeral. In response to a control signal of the controller 160, each of light emission units, i.e., first to fourteens light emission units (0 to 6, A to G) lights on or off, so that a specific code is outputted to the displaying unit 141.

As described above in connection with Fig. 2, a refrigerating temperature and a freezing temperature may be each displayed, and thus, any one or all may be used to output a signal.

Hereinafter, an example is described where a two-digit code is outputted.

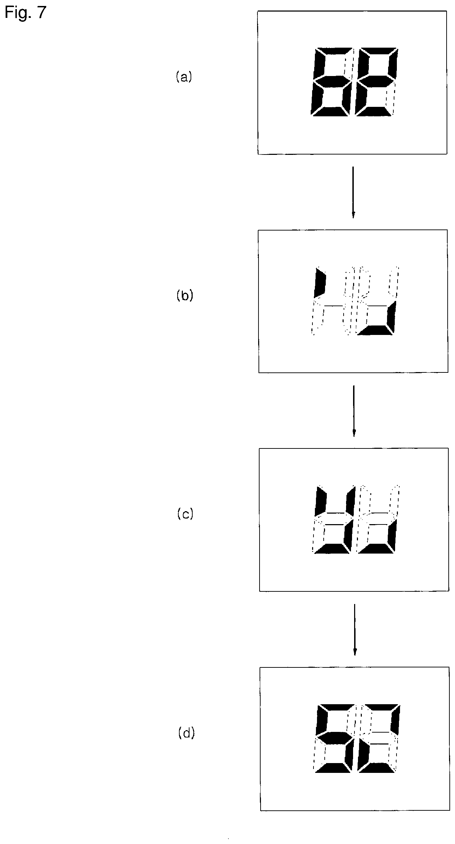

Figs. 7(a) - 7(d) are views illustrating an example of outputting product information on the displaying unit of Fig. 6.

Referring to Figs. 7(a) - 7(d), the controller 160 outputs an encoded signal to the displaying unit 141 as a two-digit code and enables it to be outputted during a predetermined time and enables it to be continuously changed.

The main controller 161 sequentially outputs signals converted by the encoding unit 162 to the displaying unit 141 according to an order at a predetermined time interval.

Thus, an encoded signal is outputted during a predetermined time, while changing itself at a predetermined time interval as shown in Figs. 7a, b, c, and d. As shown in Fig. 7a, the first, third, fourth, fifth, sixth, and seventh light emission units 0, 2, 3, 4, 5, and 6 and the eighth, ninth, eleventh, twelfth, thirteenth, and fourteenth light emission units A, B, D, E, F, and G are lighted on so that the first code is output, and in a predetermined time. As shown in Fig. 7b, the fifth light emission unit 4 and the tenth and eleventh light emission units C and D are lighted on so that the second code is outputted.

In a predetermined time, as shown in Fig. 7c, a code is outputted, and thereafter, as shown in Fig. 7d, a code is outputted. For example, the displaying unit 141 may outputted with the codes changing 15 times per second.

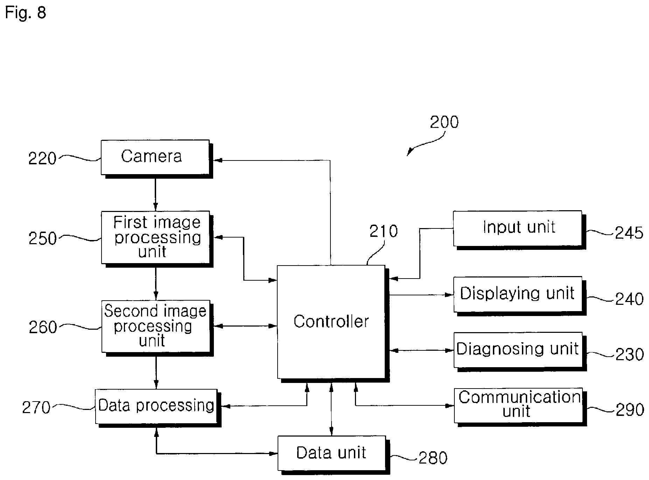

Fig. 8 is a block diagram illustrating a configuration of a diagnostic apparatus according to an embodiment of the present invention. Referring to Fig. 8, the diagnostic apparatus 200 includes a displaying unit 240, an input unit 245, a communication unit 290, a data unit 280, a camera 220, a first image processing unit 250, a second image processing unit 260, a data processing unit 270, a diagnosing unit 230, and a controller 210 that controls the overall operation of the diagnostic apparatus.

The displaying unit 240 displays various information including a diagnosis progressing state or diagnosis result for the diagnostic apparatus. The displaying unit 240 also outputs a preview screen of image captured through the camera 220.

The data unit 280 stores diagnosis logics and diagnosis data items for diagnosing the home appliance. A data structure stored in the data unit 280 may include a table that stores at least one diagnosis logic (hereinafter, 'diagnosis logic table') and a table that stores at least one diagnosis data item (hereinafter, 'diagnosis data table'). The diagnosis logic table and the diagnosis data table may be separately managed depending on a target for diagnosis.

For example, the diagnostic apparatus 200 is not necessarily configured to diagnose only the refrigerator and may be configured to diagnose home appliances other than the refrigerator. In such case, the diagnosis logic table may separately store a washing machine diagnosis logic for diagnosing a washing machine and a refrigerator diagnosis logic for diagnosing a refrigerator. Likewise, the diagnosis data table may separately store data items necessary for diagnosing a washing machine and data items necessary for diagnosing a refrigerator.

Further, in case a signal outputted to the displaying unit of the home appliance is captured as an image, the data unit 280 stores image processing data for analyzing frames for the image and extracting a code from the image and code data for extracting the product information from the code, and diagnosis result data.

The data unit 280 may include a recording medium, such as a RAM, a ROM, or a NAND flash memory, as a storage device for recording captured image data.

The camera 220 captures a surrounding image with lens and an image sensor in a capturing mode. An image frame captured by the camera 220 may be displayed on the displaying unit 240. The image frame captured in the camera 220 may be stored in the data unit 280 as image data by the first image processing unit 250 or may be transmitted to the outside through the communication unit 290.

As described above in connection with Fig. 2, the camera 220 may capture the displaying unit 141 of the home appliance, e.g., a refrigerator, as a video. At this time, as illustrated in Figs. 7(a) - 7(d), since codes are changed at a predetermined time interval on the displaying unit 141 of the refrigerator, a video is captured in which codes are continuously changed and a predetermined code is captured in each image frame.

The first image processing unit 250 processes an image frame, such as a still image or video, received from the camera 220. The first image processing unit 250 generates a still image or video from an input image frame and stores it in the data unit 280.

The second image processing unit 260 analyzes the image frame from the video generated by the first image processing unit 250 and recognizes a code from the image frame, thereby extracting the code. The second image processing unit 260 recognizes the displaying unit of the home appliance from the image frame, extracts the signal outputted from the displaying unit, i.e., the code, on a per-frame basis, chooses a valid frame, and extracts the code.

The captured video includes a plurality of image frames, each of which includes a code. Since various forms of frames are provided, such as a frame in which the form of a code has been clearly captured, a frame in which a code is about to change, or a frame in which the same code as in the previous frame has been captured, the second image processing unit 260 selects a valid frame by recognizing the captured code in each image frame.

The second image processing unit 260 analyzes a plurality of codes extracted from the second image processing unit 260 and performs inverse-transform based on the code data stored in the data unit 280 to thereby extract product information of the home appliance from the plurality of codes. At this time, the second image processing unit 260 extracts a control signal from the plurality of codes and decodes the control signal according to a designated conversion scheme, thereby extracting the product information.

The diagnosing unit 230 analyzes the product information extracted by the second image processing unit 260 according to a diagnosis logic and diagnosis data to thereby diagnose the state of the home appliance. The diagnosing unit 230 generates diagnosis results including whether there is a failure, cause of the failure, and a measure to be taken to the failure, and sends the diagnosis results to the controller 210.

As a great amount of product information is included in the signal outputted from the home appliance, the diagnosing unit 230 analyzes each data item included in the product information and diagnoses the home appliance depending on the correlation between the data items.

At this time, since the product information may include product identification information, the diagnosing unit 230 may identify the type of a target for diagnosis through the product information extracted through the data processing unit 270, and accordingly, may call data items used for diagnosing the refrigerator and a refrigerator diagnosis logic according to the target for diagnosis from the data unit 280, thereby performing a diagnosis.

The controller 210 may output a diagnosis result to the displaying unit 240, and depending on settings, may transmit the diagnosis result to the service center 300 through the communication unit 290 or may transmit the diagnosis result to a destination registered in user information, for example, the user's email account or user's terminal.

Further, in case additional data is needed upon diagnosis of the home appliance by the diagnosing unit 230, the controller 210 may send a request for data to the service center 300 through the communication unit 290. In some cases, when determining that it is impossible for the diagnosing unit 230 to perform a diagnosis, the controller 210 may transmit extracted product information to the service center through the communication unit 290 so as to send a request for diagnosis to the service center. At this time, if a diagnosis result is received from the diagnosis server of the service center, the diagnosis result is outputted to the displaying unit 240, and/or is transmitted to the user's email account or user's terminal.

In case the extracted product information includes an error, that is, in case the extracted product information is abnormal, in response to a request from the data processing unit 270, the controller 210 may enable an alert of requesting re-output of a signal to be outputted through the displaying unit 240 in at least one form of a letter, an image, an emoticon, and a special sign.

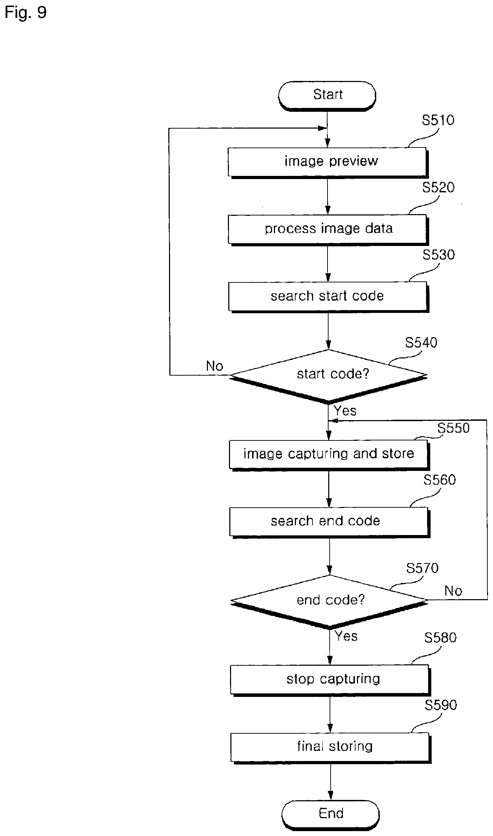

Fig. 9 is a flowchart illustrating a method of inputting product information by a diagnostic apparatus according to an embodiment of the present invention.

Referring to Fig. 9, the controller 210 of the diagnostic apparatus drives the camera 220 when receiving a diagnosis execution command for the home appliance according to manipulation of the input unit 245.

At this time, a user brings the diagnostic apparatus close to the displaying unit of the home appliance so that the displaying unit of the home appliance is captured as described above in connection with Fig. 2.

If the camera 220 is driven, the displaying unit 240 outputs an image input through the camera 220 as a preview screen (S510).

The image data input through the camera 220 is processed by the first image processing unit 250 (S520), and the second image processing unit 260 analyzes the image data processed by the first image processing unit 250 on a per-frame basis to thereby search a start code (S530).

At this time, the first image processing unit 250 processes an image captured through the camera 220, i.e., an image signal input from the image sensor of the camera, by a predetermined codec. The second image processing unit 260 analyzes the image data image-processed by the first image processing unit 250 on a per-frame basis and searches for a specific code. At this time, the image data processed by the first image processing unit 250 is temporarily stored.

In case among image frames inputted in the preview state, one includes a start code (S540), the second image processing unit 260 applies the start signal to the controller 210, and the controller 210 controls the camera 220 according to the inputted start signal to start video capturing (S550).

At this time, the first image processing unit 250 discards the image data in the preview state after temporarily storing it, and if the start signal is inputted so that video capturing is initiated, processes image data input from the camera 220 and stores the processed image data in the data unit 280.

If video capturing begins, the second image processing unit 260 analyzes each frame of the image data inputted from the first image processing unit 250 and recognizes a predetermined signal output through the displaying unit of the home appliance, i.e., encoded product information.

The second image processing unit 260 classifies frames having captured codes to set a valid frame, and discards the other frames.

Further, since the video capturing commences, the second image processing unit 260 searches an end code among codes recognized by performing per-frame analysis on the image data processed by the first image processing unit 250 (S560).

In case there is a frame including the end code, the second image processing unit 260 applies an end signal to the controller 210, and the controller 210 thus applies a capturing end command to the camera 220 to thereby stop capturing (S580).

If the capturing is complete, the first image processing unit 250 finally stores the image data (S590).

Here, the start code and the end code are codes respectively indicating the start and end of output of product information when the product information is encoded and outputted as a predetermined signal in a home appliance, and are preset codes. The second image processing unit 260 analyzes the frames and recognizes the codes, and senses a preset start code or end code among the recognized codes and sends a start signal or end signal to the controller 210.

The diagnostic apparatus may not only recognize the start code and end code from the input image to thereby capture encoded product information, as described above, but in some cases, may also recognize only one of the start code and the end code to thereby start or end video capturing. Further, the diagnostic apparatus may start or end video capturing in response to a key entry of the input unit 245.

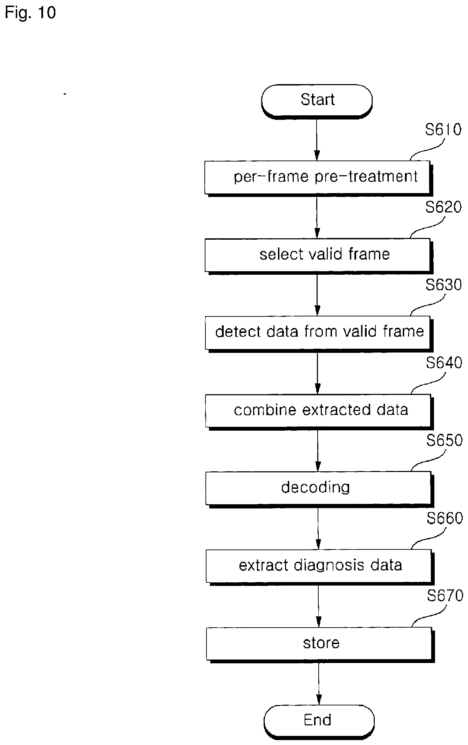

Fig. 10 is a flowchart illustrating a method of processing product information of a diagnostic apparatus according to an embodiment of the present invention.

Referring to Fig. 10, if product information is encoded and outputted as a predetermined signal in a home appliance, the diagnostic apparatus, as described above, captures a signal output of the displaying unit of the home appliance as a video.

The first image processing unit 250 performs image processing on the image signal input from the camera 220 on a per-frame basis, and the second image processing unit 260 recognizes a code included in each frame to select a valid frame (S620).

At this time, in case, according to a rate of frames being captured and a speed at which the signal of the home appliance is changed, the same code is captured and included in a plurality of frames or by sensing each code from a frame capturing the moment that a code is changed, the second image processing unit 260 excludes frames including codes impossible to recognize and duplicate frames capturing the same code and chooses frames including codes possible to recognize as valid frames.

The second image processing unit 260 recognizes a code from a valid frame and figures out a signal value corresponding to the code based on code data stored in the data unit 280, thereby detecting data (S630).

If code recognition is completed on the plurality of frames of image data, the data processing unit 270 combines and decodes the data extracted by the second image processing unit 260 (S650) to thereby extract the product information (S660).

The diagnosing unit 230 diagnoses the home appliance based on the product information extracted by the data processing unit 270 and generates a diagnosis result.

The controller 210 outputs the diagnosis result to the displaying unit 240 and/or transmits the diagnosis result through the communication unit 290 to the service center and/or user's terminal.

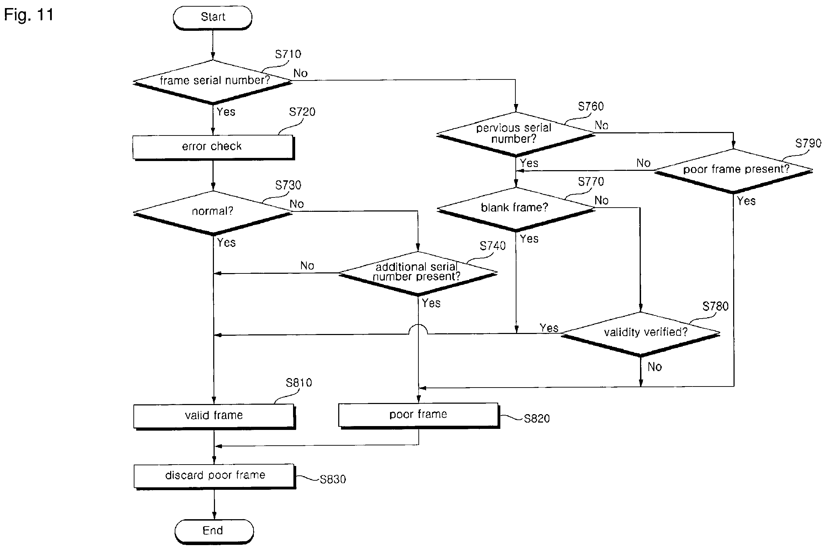

Fig. 11 is a flowchart illustrating a method of processing an image frame of a diagnostic apparatus according to an embodiment of the present invention. As described earlier, a method of recognizing codes from frames of image data and choosing a valid frame is as follows.

Referring to Fig. 11, the second image processing unit 260 verifies a serial number of a frame of image data (S710). If the serial number of the frame is a normal serial number according to a predetermined order, an error check is performed on the frame (S720).

In response to a result of the error check of the frame, the second image processing unit 260 determines whether the frame is normal (S730), and if the frame is normal, sets the frame as a valid frame (S810).

On the other hand, in case the result of the frame error check shows the frame is abnormal, that is, in case an error occurs, it is identified whether an additional serial number is present (S740), and in case no additional serial number is present, the frame is set as a valid frame (S810).

At this time, in case no additional serial number is present and an error occurs, the frame is determined as a poor frame (S820).

In case the frame serial number is abnormal, it is determined whether the frame serial number is a previous serial number (S760).

In case the frame serial number is a previous serial number, it is determined whether the frame is a blank frame (S770), and in case the frame serial number is a previous serial number and the frame is a blank frame, the frame is processed as a valid frame (S810). In case the frame serial number is a previous serial number and the frame is not a blank frame, the validity is verified (S780).

Whether the frame is valid is determined, and if the frame is valid, the frame is set as a valid frame (S810), or otherwise, as a poor frame (S820).

In case the frame serial number is abnormal and is not a previous serial number, it is determined whether the frame is a poor frame (S790). In case the frame is a poor frame, the frame is set as a poor frame, and unless the frame is a poor frame, whether the frame is a blank frame is verified (S770), and according to a result of verification, the frame is set as a valid frame (S810) or validity of the frame is verified (S780).

As described earlier, the frame is set as a valid frame or a poor frame through validity verification.

After the validity of the frame is determined, the poor frame is discarded (S830), and a code included in a valid frame is recognized and product information is extracted, and based on the product information, the diagnostic apparatus is diagnosed.

## Claims

1. A diagnosis method of a diagnostic apparatus (200) for a home appliance (100), the diagnosis method comprising the following steps:
driving a camera (220) of the diagnostic apparatus (200) when receiving a diagnosis execution command for the home appliance (100) according to manipulation of an input unit (245) of the diagnostic apparatus (200);
capturing, by the camera (220), a signal output at a displaying unit of the home appliance (100) as an image signal;
outputting the image signal as a preview screen by a displaying unit (240) of the diagnostic apparatus (200);
processing the image data input through the camera (220) by a first image processing unit (250) of the diagnostic apparatus (200);
analyzing the image data processed by the first image processing unit (250) on a per-frame basis by a second image processing unit (260) of the diagnostic apparatus (200) to thereby search a start code,
applying a start signal to a diagnostic apparatus controller (210) of the diagnostic apparatus (200) by the second image processing unit (260) in case among image frames inputted in the preview screen one includes a start code;
controlling the camera (220) by the diagnostic apparatus controller (210) according to the applied start signal to start video capturing;
if the start signal is inputted, discarding, by the first image processing unit (250), the image data in the preview screen after temporarily storing it and processing further image data input from the camera (220);
if the video capturing starts, analyzing each frame of the further image data inputted from the first image processing unit (250) by the second image processing unit (260);
classifying frames having captured codes to set a valid frame, and discarding the frames not having the captured codes by the second image processing unit (260);
recognizing product information encoded in the captured codes of the home appliance by the second image processing unit (260);
searching an end code by the second image processing unit (260) among the codes recognized by performing per-frame analysis on the processed image data processed by the first image processing unit (250);
applying an end signal to the diagnostic apparatus controller (210) by the second image processing unit (260) in case there is a frame including the end code;
if an end signal is applied, applying a capturing end command to the camera (220) by the diagnostic apparatus controller (210) to thereby stop capturing; and
storing the further image data in a data unit (280) of the diagnostic apparatus (200) by the first image processing unit (250) if the capturing is complete; and
diagnosing the home appliance (100) corresponding to the product information and outputting a diagnosis result by a diagnosing unit (230) of the diagnostic apparatus (200).

2. A diagnostic apparatus (200) for a home appliance (100), the diagnostic apparatus (200) comprising:
an input unit (245)
a camera (220);
a displaying unit (240);
a first image processing unit (250);
a second image processing unit (260);
a data unit (280);
a diagnosing unit (230); and
a controller (210),
wherein the diagnostic apparatus (200) is configured to carry out the method of claim 1.

## Patentansprüche

1. Diagnoseverfahren einer Diagnosevorrichtung (200) für ein Haushaltsgerät (100), wobei das Diagnoseverfahren die folgenden Schritte umfasst:
Ansteuern einer Kamera (220) der Diagnosevorrichtung (200), wenn sie einen Diagnoseausführungsbefehl für das Haushaltsgerät (100) entsprechend einer Manipulation einer Eingabeeinheit (245) der Diagnosevorrichtung (200) empfängt;
Erfassen einer Signalausgabe auf einer Anzeigeeinheit des Haushaltsgeräts (100) als ein Bildsignal durch die Kamera (220);
Ausgeben des Bildsignals als einen Vorschaubildschirm durch eine Anzeigeeinheit (240) der Diagnosevorrichtung (200);
Verarbeiten der Bilddateneingabe durch die Kamera (220) durch eine erste Bildverarbeitungseinheit (250) der Diagnosevorrichtung (200);
Analysieren der Bilddaten, die von der ersten Bildverarbeitungseinheit (250) verarbeitet worden sind, auf einer Vorrahmenbasis durch eine zweite Bildverarbeitungsvorrichtung (260) der Diagnosevorrichtung (200), um dadurch einen Startcode zu suchen,
Anwenden eines Startsignals auf eine Diagnosevorrichtungs-Steuereinrichtung (210) der Diagnosevorrichtung (200) durch die zweite Bildverarbeitungseinheit (260), falls unter den Bildrahmen, die in den Vorschaubildschirm eingegeben worden sind, einer einen Startcode enthält;
Steuern der Kamera (220) durch die Diagnosevorrichtungs-Steuereinrichtung (210) entsprechend dem angewendeten Startsignal, um die Videoerfassung zu beginnen;
dann, wenn das Startsignal eingegeben worden ist, Löschen durch die erste Bildverarbeitungseinheit (250) der Bilddaten in dem Vorschaubildschirm, nachdem diese vorübergehend gespeichert worden sind, und Verarbeiten einer weiteren Bilddateneingabe von der Kamera (220);
dann, wenn die Videoerfassung beginnt, Analysieren jedes Rahmens der weiteren Bilddaten, die von der ersten Bildverarbeitungseinheit (250) eingegeben worden sind, durch die zweite Bildverarbeitungseinheit (260);
Klassifizieren von Rahmen, die erfasste Codes enthalten, um einen gültigen Rahmen einzustellen, und Löschen der Rahmen, die die erfassen Codes nicht enthalten, durch die zweite Bildverarbeitungseinheit (260);
Erkennen von Produktinformationen, die in den erfassten Codes des Haushaltsgeräts codiert sind, durch die zweite Bildverarbeitungseinheit (260);
Suchen eines Endcodes durch die zweite Bildverarbeitungseinheit (260) unter den Codes, die durch das Durchführen einer Vorrahmen-Analyse auf den verarbeiteten Bilddaten, die durch die erste Bildverarbeitungseinheit (250) verarbeitet worden sind, erkannt worden sind;
Anwenden eines Endsignals auf die Diagnosevorrichtungs-Steuereinrichtung (210) durch die zweite Bildverarbeitungseinheit (260), falls es einen Rahmen gibt, der den Endcode enthält;
dann, wenn ein Endsignal angewendet wird, Anwenden eines Erfassungsendbefehls auf die Kamera (220) durch die Diagnosevorrichtungs-Steuereinrichtung (210), um dadurch das Erfassen zu beenden; und
Speichern der weiteren Bilddaten in einer Dateneinheit (280) der Diagnosevorrichtung (200) durch die erste Bildverarbeitungseinheit (250), wenn das Erfassen abgeschlossen ist; und
Diagnostizieren des Haushaltsgeräts (100) entsprechend den Produktinformationen und Ausgeben eines Diagnoseergebnisses durch eine Diagnoseeinheit (230) der Diagnosevorrichtung (200).

2. Diagnosevorrichtung (200) für ein Haushaltsgerät (100), wobei die Diagnosevorrichtung (200) Folgendes umfasst:
eine Eingabeeinheit (245);
eine Kamera (220);
eine Anzeigeeinheit (240);
eine erste Bildverarbeitungseinheit (250);
eine zweite Bildverarbeitungseinheit (260);
eine Dateneinheit (280);
eine Diagnoseeinheit (230); und
eine Steuereinrichtung (210),
wobei die Diagnosevorrichtung (200) konfiguriert ist, das Verfahren nach Anspruch 1 auszuführen.

## Revendications

1. Procédé de diagnostic d'un appareil de diagnostic (200) pour un appareil domestique (100), le procédé de diagnostic comportant les étapes suivantes consistant à :
piloter un appareil de prise de vues (220) de l'appareil de diagnostic (200) à réception d'une instruction d'exécution de diagnostic pour l'appareil domestique (100), en fonction d'une manipulation d'une unité d'entrée (245) de l'appareil de diagnostic (200) ;
capturer, par l'appareil de prise de vues (220), une sortie de signal sur une unité d'affichage de l'appareil domestique (100) sous la forme d'un signal d'image ;
délivrer en sortie le signal d'image sous la forme d'un écran de prévisualisation par une unité d'affichage (240) de l'appareil de diagnostic (200) ;
traiter l'entrée de données d'image par l'appareil de prise de vues (220) par une première unité de traitement d'image (250) de l'appareil de diagnostic (200) ;
analyser les données d'image traitées par la première unité de traitement d'image (250) sur une base trame par trame, par une seconde unité de traitement d'image (260) de l'appareil de diagnostic (200), pour ainsi rechercher un code de début,
appliquer un signal de début à une commande d'appareil de diagnostic (210) de l'appareil de diagnostic (200) par la seconde unité de traitement d'image (260) dans le cas où, parmi des trames d'images entrées dans l'écran de prévisualisation, l'une inclut un code de début ;
commander l'appareil de prise de vues (220) par la commande d'appareil de diagnostic (210) en fonction du signal de début appliqué pour démarrer une capture vidéo ;
si le signal de début est appliqué en entrée, supprimer, par la première unité de traitement d'image (250), les données d'image dans l'écran de prévisualisation après les avoir temporairement stockées et traiter une entrée de données d'image supplémentaire provenant de l'appareil de prise de vues (220) ;
si la capture vidéo démarre, analyser chaque trame des données d'image supplémentaires entrées à partir de la première unité de traitement d'image (250), par la seconde unité de traitement d'image (260) ;
classer des trames ayant des codes capturés pour définir une trame valide, et supprimer les trames n'ayant pas les codes capturés par la seconde unité de traitement d'image (260) ;
reconnaître des informations de produit encodées dans les codes capturés de l'appareil domestique par la seconde unité de traitement d'image (260) ;
rechercher un code de fin par la seconde unité de traitement d'image (260) parmi les codes reconnus en exécutant une analyse trame par trame sur les données d'image traitées par la première unité de traitement d'image (250) ;
appliquer un signal de fin à la commande d'appareil de diagnostic (210) par la seconde unité de traitement d'image (260) dans le cas où il existe une trame incluant le code de fin ;
si un signal de fin est appliqué, appliquer une instruction de fin de capture à l'appareil de prise de vues (220) par la commande d'appareil de diagnostic (210) pour ainsi arrêter la capture ; et
stocker les données d'image supplémentaires dans une unité de données (280) de l'appareil de diagnostic (200) par la première unité de traitement d'image (250) si la capture est terminée ; et
diagnostiquer l'appareil domestique (100) correspondant aux informations de produit et délivrer en sortie un résultat de diagnostic par une unité de diagnostic (230) de l'appareil de diagnostic (200).

2. Appareil de diagnostic (200) pour un appareil domestique (100), l'appareil de diagnostic (200) comportant :
une unité d'entrée (245) ;
un appareil de prise de vues (220) ;
une unité d'affichage (240) ;
une première unité de traitement d'image (250) ;
une seconde unité de traitement d'image (260) ;
une unité de données (280) ;
une unité de diagnostic (230) ; et
une commande (210),
dans lequel l'appareil de diagnostic (200) est configuré pour mettre en œuvre le procédé de la revendication 1.
